Europäisches Patentamt

European Patent Office

Office européen des brevets

(19)

(11) Publication number: 0 250 908 B1

## EUROPEAN PATENT SPECIFICATION

(12)

(45) Date of publication of patent specification: 23.12.92  (51) Int. Cl.⁵: **A01N 25/10, A01N 63/00**

(21) Application number: **87108042.0**

(22) Date of filing: **03.06.87**

(54) Pesticidal compositions and process for preparation thereof.

(30) Priority: **03.06.86 US 870195**

(43) Date of publication of application:
**07.01.88 Bulletin 88/01**

(45) Publication of the grant of the patent:
**23.12.92 Bulletin 92/52**

(84) Designated Contracting States:
**AT BE CH DE FR GB IT LI NL SE**

(56) References cited:
**EP-A- 0 097 571**
**DE-A- 2 022 391**
**US-A- 4 223 007**

(73) Proprietor: **DOWELANCO**
**9002 Purdue Road**
**Indianapolis, Indiana 46268-3030(US)**

(72) Inventor: **Rheaume, Lisa J.**
**5112 Dale street**
**Midland, Mich. 48640(US)**
Inventor: **Gegner, Julie A.**
**1926 Blue Water Highway**
**Surfside Texas 77541(US)**
Inventor: **Peters, James**
**3109 Applewood**
**Midland, Mich. 48640(US)**
Inventor: **Jakubowski, James J.**
**3706 Swede Road**
**Midland, Mich. 48640(US)**
Inventor: **Haigh, Daniel H.**
**2130 N. 11 Mile, Route 1**
**Sanford, Mich. 48657(US)**

(74) Representative: **Huber, Bernhard, Dipl.-Chem.**
**et al**
**Patentanwälte H. Weickmann, Dr. K. Fincke**
**F.A. Weickmann, B. Huber Dr. H. Liska, Dr. J.**
**Prechtel Kopernikusstrasse 9 Postfach 86 08**
**20**
**W-8000 München 86(DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

**Description**

There is considerable commercial interest in pesticidal compositions which exhibit their pesticidal activity against the target pest after the composition is ingested. Microorganisms such as bacteria, fungi, viruses and certain products made by or within microorganisms are examples of ingestible biological pesticides currently used to combat insect pests. The most widely used ingestible biological pesticide is Bacillus thuringiensis, of which many varieties are known, and products of this bacterial species.

Ingestible biological pesticides have several advantages such as being relatively nontoxic and nonpathogenic to nontarget organisms such as humans.

Despite the advantages of ingestible biological pesticides, they also have several disadvantages which limit their effectiveness. Among these disadvantages are low stability and low persistence. For example, Bacillus thuringiensis var. israelensis (and the insecticidal crystal protein produced by this organism) has low persistence when used in an aqueous environment because typical commercial products containing the high density insecticidal crystalline protein from Bacillus thuringiensis var. israelensis sink which prevents the product from floating in the mosquito larvae feeding zone. In addition, many biological pesticides, for example, Bacillus thuringiensis, suffer low persistence due to their instability when exposed to various environmental factors such as ultraviolet light.

In order to increase the persistence and/or stability of biological pesticides, they have been adsorbed to latex beads (see Schnell, D. J., Science (1984) 223:1191) or encapsulated with lactones (see European Patent Application 145,087) or polyethylene (see Margalit, J. et al., Appl. Microbiol. Biotechnol. (1984) 19:382-383). However, many prior art methods of encapsulation involve the use of harsh treatments such as the use of organic solvents or heat. Biological pesticides are sensitive to such harsh treatments and can lose substantial activity because of their use.

The present invention relates to pesticidal compositions of increased persistence and stability and a process for preparation thereof which involves a mild process of entrapment. The process of the present invention can be applied directly to an aqueous suspension, such as to a fermentation broth or concentrate. The present invention also concerns a method of using the pesticidal compositions described herein for the control of target pests.

This invention is directed to a pesticidal composition comprising a pesticidally effective amount of a suitable pesticide entrapped by a suitable charged polymer,

**characterized in that**
the polymer is selected from the group comprising poly(ethyleneimine), Poly(vinylbenzyl-trimethylammonium chloride), poly(diallyldimethyl-ammonium chloride), polybrene ionene, reactive polysoap, ethylene/acrylic acid, ethylene/methacrylic acid, linear poly(acrylic acid), cross-linked poly(acrylic acid), polystyrene sulfonate, carrageenan type IV, carrageenan type V, polystyrene/butadiene latex containing phosphinic acid moieties, polystyrene/-butadiene latex containing phosphonic acid moieties, methacrylic acid/ethyl acrylate, methacrylic acid/butyl acrylate, methacrylic acid/styrene, methacrylic acid/butadiene, acrylic acid/acrylamide, ethyl acrylate/vinyl acetate/methacrylic acid/acrylic acid, or methyl methacrylate/methacrylic acid/ethyl acrylate.

The pesticidal composition of the invention has physical characteristics such that it is capable of ingestion by a target pest. The pesticidal compositions can optionally contain other active agents or fillers which enhance the activity of the composition or impart other desirable characteristics to the composition. It is preferred that the pesticidal compositions of the invention have a higher water flotation ability as compared to unencapsulated or unentrapped pesticides. It is also preferred that the pesticides of the compositions are biologically derived or biologically synthesized. The invention also concerns a method of using the pesticidal compositions for the control of target pests and is also directed to a process for the preparation of such pesticidal compositions.

As used herein, the term "ingestible pesticidal composition" means a composition which has physical characteristics, such as sufficiently small particle size, that the composition is capable of being ingested by the target pest and that the pesticide contained in the composition exhibits its pesticidal activity after ingestion by the target pest;
the term "pesticide" or "ingestible pesticide" refers to pesticides which exhibit their pesticidal activity after ingestion by the target pest;
the term "pesticidally effective amount" refers to that amount of pesticide that will lead to control of a target pest. The term "control" refers to inhibition, kill or any other interference which disrupts the normal life processes of a target pest in a manner adverse to the pest.

The process of making the pesticidal compositions comprises contacting a suitable ingestible pesticide with a suitable charged polymer in an aqueous medium, modifying the charge of the charged polymer to cause precipitation of the polymer which entraps the pesticide to form a solid pesticidal composition comprised of a pesticidally effective amount of said pesticide and an entrapping amount of charged polymer,

**characterized in that**

the polymer is selected from the group comprising poly(ethyleneimine), poly(vinylbenzyl-trimethyammonium chloride), poly(diallyldimethyl-ammonium chloride), polybrene ionene, reactive polysoap, ethylene/acrylic acid, ethylene/methacrylic acid, linear poly(acrylic acid), cross-linked poly(acrylic acid), polystyrene sulfonate, carrageenan type IV, carrageenan type V, polystyrene/butadiene latex containing phosphinic acid moieties, polystyrene/-butadiene latex containing phosphonic acid moieties, methacrylic acid/ethyl acrylate, methacrylic acid/butyl acrylate, methacrylic acid/styrene, methacrylic acid/butadiene, acrylic acid/acrylamide, ethyl acrylate/vinyl acetate/methacrylic acid/acrylic acid, or methyl methacrylate/methacrylic acid/ethyl acrylate.

A typical entrapping amount of charged polymer is from 5 to 99.999 percent by weight (compared to the total weight of the pesticide and polymer) of the charged polymer. A preferred amount of charged polymer present in the compositions of the present invention is from 25 to 99.99 percent by weight; and a more preferred amount is from 50 to 99.9 percent by weight. Suitable charged polymers for entrapping the ingestible pesticides are one or more charged polymers having the capability of existing in solution or as a dispersion in an aqueous phase and which precipitate from the aqueous phase when the charge is modified. The term "precipitate" or "precipitation" as used herein means that if the charged polymer is soluble in water, then it becomes insoluble upon charge modification; or if the charged polymer exists as a dispersion in water, then it forms aggregates and comes out of suspension upon charge modification. As used herein, the term "charged polymer" refers to a polymer bearing functional groups that are charged or capable of being charged. This is, if the charged polymer is an anionic polymer, it will contain functional groups which are predominantly in the acid form, or as a salt of an acid, or as combinations of the acid and salt forms. Anionic charged polymers may also contain other functional groups, including cationic functional groups; however, the majority of the functional groups will be in the acid form and/or as a salt of an acid. If the charged polymer is a cationic polymer, it will contain functional groups which are predominantly in the base form, or as a salt of a base, or as combinations of the base and salt forms. Cationic charged polymers may also contain other functional groups, including anionic functional groups; however, the majority of the functional groups will be in the base form and/or as a salt of a base. A key feature of the present invention is that upon precipitation of the charged polymer, the pesticide, preferably an ingestible biological pesticide, becomes entrapped in the precipitated polymer matrix. The term "entrapped" means that the pesticide is in direct association with the charged polymer (that is, entrapped in the polymer matrix not in the liquid phase). Thus, the polymer and the pesticide have a greater affinity for each other than for the water phase. This affinity which leads to entrapment may be due, for example, to ionic effects, hydrophobicity, hydrogen bonding, van der Waals forces, or other such physical attraction or covalent or noncovalent chemical bonding.

Suitable charged polymers can be homopolymers, copolymers, multipolymers, or any mixture thereof bearing functional groups that are charged or capable of being charged. The size, molecular weight and other physical characteristics of the polymers are not critical as long as they can precipitate upon charge modification and entrap the desired pesticide.

The functional groups that impart the charge to the polymers can be acid derivatives that have a negative charge or are capable of having a negative charge such as carboxylic, sulfonic, phosphonic or phosphinic moieties in the acid form and/or as a salt thereof. In contrast, the functional groups can also be derivatives that have a positive charge or are capable of having a positive charge such as ammonium, sulfonium, phosphonium or pyridinium moieties. It is contemplated that mixtures of functional groups may be present on the polymer or mixtures of polymers; however, the polymer must contain sufficient cationic or anionic functional groups or groups which are capable of becoming anionic or cationic functional groups so that the overall charge of the polymer can be modified.

The number or quantity of functional groups on the charged polymer is only important insofar as the charge allows the polymer to be dispersed in an aqueous medium or in solution in an aqueous medium and said polymer precipitates when the charge is modified and entraps the desired pesticide. Therefore, the quantity of charged functional groups required in the polymer will vary with the type of functional group, the type of polymer, the type of pesticide, and the method of charge modification. For example, if the functional group is a carboxylic acid moiety, the carboxylic acid moiety will typically be between 4 percent and 63 percent by weight of the total weight of the polymer, preferably between 9 percent and 63 percent.

Suitable anionic charged polymers having carboxylic moieties are linear or cross-linked poly(acrylic acid), and copolymers or multipolymers of polymerizable alkenes and acrylic acid and/or methacrylic acid,

3

for example, copolymers of ethylene and acrylic acid or ethylene and methacrylic acid. Typical anionic charged polymers that have sulfonic moieties are polystyrene sulfonate; and carrageenan, types IV and V. Suitable anionic polymers that have phosphonic or phosphinic moieties are polystyrene/butadiene latex containing phosphinic acid moieties; and polystyrene/butadiene latex containing phosphonic acid moieties.

Suitable cationic charged polymers having ammonium moieties are protonated primary, secondary, or tertiary amines such as poly(ethylenimine); quaternary pendant amines such as poly-(vinylbenzyltrimethylammonium chloride) and poly(diallyldimethylammonium chloride); and quaternary integral amines such as polybrene ionene. A typical cationic charged polymer that has sulfonium moieties is reactive polysoap (i.e., methyl methacrylate/vinylbenzyl chloride onium derivatized copolymer).

The most preferred polymers for use in the present invention are copolymers of ethylene and acrylic acid or ethylene and methacrylic acid. Also preferred are other acrylic acid copolymers or methacrylic acid copolymers such as acrylic/acrylate, and methacrylic/acrylate. The most preferred copolymer is an ethylene/acrylic acid copolymer in which the amount of acrylic acid is from 10 percent to 99 percent, by weight, of the total copolymer, preferably between 12 percent and 25 percent and most preferably between 15 percent and 20 percent by weight.

The term "charge modification" refers to modifying the charge of the functional groups of the suitable charged polymer enough to cause precipitation of the polymer and entrapment of the pesticide. Charge modification of the polymer to effect precipitation of the polymer and entrapment of the pesticide can be accomplished by several means. For example, the pH of the aqueous environment containing the charged polymer can be raised or lowered, depending upon the polymer, to a pH which causes polymer precipitation. The pH can be changed by the addition of an organic acid or mineral acid, for example, acetic acid or HCl or a base such as KOH or NaOH. Alternatively, the charged polymer can be salted out of solution with simple salts such as KCl or NaCl; or multivalent ions of a charge opposite to the polymer can be added to the aqueous solution to cause precipitation of the charged polymer, for example, $Ca^{++}$, $Al^{+++}$ or $SO_4^{--}$; or the charged polymer can be coacervated with another polymer having an opposite charge. If the charged polymer is neutralized with a volatile ion in order to effect dispersion or dissolution of the polymer (e.g., ethylene/acrylic acid, ethylene/methacrylic acid, acrylate/acrylic acid, acrylate/methacrylic acid or other polymers or copolymers containing acid functionality, neutralized for example with ammonium hydroxide), the bioactive pesticide can be dispersed in the polymer dispersion or solution, and the charge of the polymer subsequently modified by simple drying precedures that allow the ammonia to volatilize along with the water, thereby placing the polymer in the charge-modified form.

As appreciated by one skilled in the art of polymer chemistry, the method selected to cause precipitation of the polymer and entrapment of the pesticide will depend upon factors such as the properties of the polymer used for entrapment and the properties of the pesticide to be entrapped. The efficiency of pesticide entrapment will vary with different polymers and pesticides in that the relative affinities for each other will vary with each pesticide and each polymer.

The ingestible pesticides used in the compositions of the present invention are those pesticides that are pesticidally effective in controlling target pests after the target pests have ingested the pesticidal composition. Target pests are those pests capable of ingesting pesticidal compositions. Typical target pests are arthropod organisms such as spiders, mites, insects and the like, particularly insects of the Lepidoptera, Diptera, Coleoptera, Orthoptera, Isoptera, or Homoptera orders. The ingestible pesticides for use in the compositions and processes of the present invention can be any ingestible pesticide that is capable of being entrapped with one or more of the charged polymers described herein. The ingestible pesticides can be insecticides, miticides and the like, preferably insecticides. In addition to their action upon the target pests, the pesticides of the present invention can also have a fungicidal or fungistatic effect as well as a herbicidal effect. The pesticides can be chemically synthesized or biological pesticides. Examples of chemically synthesized pesticides for use in the present invention are acyl ureas. Preferred pesticides for use in the present invention are biological pesticides.

The preferred ingestible biological insecticides for use in the compositions and processes of the present invention can be various microorganisms, such as certain bacteria, fungi and viruses, that are toxic to insects. In addition, insecticidally toxic components of these microorganisms and insecticidally toxic products of these microorganisms are suitable for use in the present invention.

Examples of microorganisms which are suitable ingestible pesticides for use in the compositions of the present invention are viral microorganisms, for example, DNA viruses, particularly entomopoxvirus, irdovirus, baculovirus such as nuclear polyhedrosis virus (NPV) as well as "granulosis" virus (GV) and ARN virus such as cytoplasmic polyhedrosis virus (CPV). Among these, the nuclear polyhedrosis virus is preferred. Bacteria pathogenic to insects are also suitable ingestible pesticides for use in the compositions of the present invention and can be nonsporulating or sporulating bacterial microorganisms. Preferred bacteria are the spore-forming bacteria, and their components and products, belonging to the family Bacillaceae. Examples of these preferred bacteria include Bacillus thuringiensis, Bacillus sphaericus, Bacillus popilliae, Bacillus cereus, Bacillus lentimorbus and Bacillus fribourgensis. Bacillus thuringiensis of all serotypes are particularly preferred, especially serotypes 1, 3a, 3a3b, 7, 9, 10 and 14. Preferred are Bacillus thuringiensis serotype 1 (thuringiensis variety), 3a3b (kurstaki variety), 7 (aizawa variety), (tenebrionis variety) and 14 (israelensis variety).

As used herein, the term "Bt" means any insecticidally active variant of Bacillus thuringiensis and its components and products, and the term "Bti" means Bacillus thuringiensis var. israelensis and its components and products.

The biological pesticides used in the compositions and processes of the present invention can also come from microorganisms which are transformed by inserting DNA coding for the biosynthesis of certain pesticides (e.g., toxins). It is also contemplated that the present invention includes microorganisms (otherwise pesticidally inactive) that are transformed or otherwise genetically engineered into pesticidally active microorganisms by the use of genetic manipulation techniques known in the art.

The biological pesticides which are entrapped to form the ingestible pesticidal compositions of the present invention can be entrapped in numerous forms, for example, the microorganisms themselves may be entrapped in a stage of their growth which can include the dormant form, or the microbial pesticides may be entrapped in association with their culture media, or the microorganism may have undergone partial or total lysis, or used partially or totally as spores, or the pesticidal products of such microorganisms can be entrapped. These microbial products having pesticidal activity can include products spontaneously excreted by the organisms such as exotoxins, or products extracted from these organisms such as endotoxins, or products liberated by organisms at certain stages of their evolution (crystals, associated or not associated to spores) or finally as several of the forms simultaneously. Good results can be obtained with pesticides comprising a mixture containing spores, associated crystals and exotoxins. Such mixtures may contain (in addition to spores) crystals related or unrelated to the spores, exotoxins, cells, debris from the cells as well as residual solids from the nutrient media in the culture.

Depending upon the end use of the pesticidal composition, the compositions of the present invention can also contain one or more additives. For example, ultraviolet light (UV) stabilizers such as carbon black, para-aminobenzoic acid (PABA), and the like can be added to the compositions to protect the polymer and/or the pesticide from UV degradation. Also, phagostimulants such as yeast can be incorporated into the compositions and their use is often preferred. In addition, fillers can be added to the compositions to facilitate break up of the compositions and thus allow easier access to the active pesticide. Furthermore, fillers can be added to the composition to improve storage, flowability, or to facilitate application to the pests' environment. The filler can be organic or inorganic or mixtures thereof.

Mineral or inorganic fillers can be silica based, alumina or carbonates such as aluminates, precipitated silica, bentonite, attapulgite, pyrophilite, magmabentonite, talc, kaolin, diatomaceous earth, synthetic silicates, celite, vermiculite, ground silica or sand, clay, chalk, calcium carbonate, or mixtures of two or more of the fillers. Organic fillers can be lactose, starch, flours, plant matter, polymers, in the form of hollow microballoons or solid particles, waxes or grains. Generally particulate organic fillers are preferred, especially flours and cereal grains such as soy, wheat and corn. Particularly advantageous fillers comprise hollow microballoons of, for example, saran polymers, where the pesticide and polymer matrix is disposed on the surface of the microballoons. Such products have excellent flotation properties thereby making the pesticide readily available for ingestion by mosquito larvae.

The compositions of the invention may contain various other additives. They can contain fragrances or odor masking agents or preservatives such as antioxidants, bactericides, and bacteriostats. The compositions of the present invention can also contain contact pesticides such as chlorpyrifos (i.e., 0,0-diethyl 0-3,5,6-trichloro-2-pyridyl phosphorothioate).

Other additives can be incorporated into the compositions such as flocculants, for example, flocculants which remove competing particles and silt from an aquatic feeding zone.

It is contemplated that mixtures of any of the additives described herein may also be incorporated into the compositions of the present invention.

The compositions of the present invention can also be coated onto larger carrier particles (among these, e.g. hydrophobic corn cobs) for ease of application.

It is also contemplated that the pesticidal compositions of the present invention can be mixed with nonentrapped pesticides in order to achieve an initial high level of pesticidal activity which is followed by a sustained level of activity due to the entrapped materials.

The concentration of the additive, if present, can vary. Generally, the compositions can optionally contain one or more additives in which the additives are present in an amount of from 0.05 percent to 99 percent by weight (based on the total weight of the entire composition) and preferably between 0.5 percent and 95 percent by weight of the additives.

The compositions formed by the process of the present invention can have varying physical dimensions, however, they usually are particles larger than 1 micrometer (μm), but are small enough to permit ingestion by the target pest, and preferably are between 1 μm and 100 μm in diameter and more preferably between 10 μm and 50 μm in diameter. If the compositions formed by the process of the present invention are particles larger than 100 μm, they can easily be made into more desired smaller particles by using mild physical or mechanical means well known in the art.

The compositions of the present invention can be formulated to increase the pH stability of the pesticide in the application zone, for example, to increase the pH stability of a leaf surface which may be very basic or very acidic. The compositions of the present invention can also be formulated to provide increased stability toward enzymes that may be present in the application zone. In addition, the compositions of the present invention can be formulated in such a way that the pesticide is released from the polymer matrix under specified conditions, for example, under conditions such as those present in the gut or digestive tract of the target pest.

In a preferred embodiment of the present invention, a composition of Bti entrapped in ethylene/acrylic acid copolymer is ingested by a mosquito larva. Although not to be bound by any particular mode of action, it is believed that the environment within the gut of the larva, generally an alkaline environment, causes the polymer charge to become further modified, thereby releasing the Bti from the polymer matrix. The released Bti then exhibits its insecticidal effect upon the larva. Alternatively, the polymer matrix may swell in the gut to allow alkaline digestive juices (primarily proteases) to enter the polymer matrix. The alkaline digestive juices may also swell the polymer matrix itself thereby exposing the pesticide. This feature of the present invention allows the use of pesticides which may require activation in order to exhibit their insecticidal activity.

After the compositions of the present invention are formed according to the methods disclosed herein, it may be desirable to further modify the charge of the composition in order to control or tailor the composition's water or pH sensitivity so that the composition has optimal characteristics for a given target pest or a given environment. This further modification can be accomplished by adding or incorporating additional charged polymer (i.e., incorporating more unmodified polymer) to the composition or by adding an appropriate acid, base, or salt to the composition. By use of this further charge modification procedure, it is possible to make compositions in which the rate at which the polymer matrix decomposes, swells, degrades, or otherwise disperses to release pesticide is more or less responsive to the pH or ionic strength of the surrounding environment.

In preferred compositions of the present invention, the polymer imparts sufficient hydrophobicity or sufficient density modification (or both) to the pesticidal compositions such that the composition has a higher water flotation ability as compared to the pesticide alone (i.e., as compared to the nonentrapped pesticide). This higher flotation ability is particularly advantageous when the target pests are mosquito larvae. The preferred pesticidal composition, because of its higher flotation ability, will remain in the feeding zone of the mosquito larvae longer (and thus be more efficacious) than nonentrapped pesticide. The feeding zone of mosquito larvae will vary from species to species; however, typically the feeding zone is about the upper 10 to 40 centimeters (cm) of aquatic environments such as lakes, ponds, pools, salt marshes, and the like.

In other embodiments of the present invention it may be advantageous to formulate the compositions to have a lower water flotation ability. For example, for target pests whose feeding zones are not limited to the upper portions of the aquatic environment (e.g., black fly larvae), it may be desirable to have compositions of a buoyancy such that the compositions are substantially distributed throughout the aquatic environment.

The invention also relates to the use of the pesticidal compositions of the present invention. The compositions according to the invention can be used as pesticides, preferably to destroy insects. In order to control susceptible pests, the compositions are applied to the habitats of the target pest according to known techniques. Such applications can be accomplished mechanically, by air, or by other means known in the art. The compositions can be distributed in areas infested by target pests such as in areas infested by insects of the Lepidoptera, Diptera, Coleoptera, Orthoptera, Isoptera or Homoptera orders.

The pesticidally effective amount will vary widely with the type of pesticide employed. For example, if the pesticide is a virus, the effective amount can be very small; whereas if the pesticide is the toxic product of bacterium, the effective amount can be relatively large. However, a typical pesticidally effective amount of ingestible pesticide present in the compositions of the present invention is from 0.001 percent to 95 percent by weight of the pesticide to the total weight of the polymer and pesticide; preferably from 0.01 percent to 75 percent; and most preferably from 0.1 percent to 50 percent.

The dosages to be used will be determined by, among other things, the pesticide in question, the target pest to be eliminated and the method of application. Typical dosages are 0.01 to 10 kilograms of pesticidal composition solids per hectare. In the case of Bt, particularly serotypes 1, 3a3b, and 7; and Bti, 0.05 to 5 kilograms (kg) of pesticidal composition solids per hectare are typically used.

The present invention is further illustrated by the following examples. All percentages are by weight unless otherwise indicated.

Example 1

Bti wettable powder (a powder containing crystals and spores of Bacillus thuringiensis var. israelensis) was added to water to achieve a 0.18 percent by weight aqueous Bti dispersion. NaOH was added to the dispersion to adjust the pH to 8.0. An alkaline (about pH 8) aqueous dispersion of ethylene/acrylic acid copolymer (the copolymer containing between 15 and 20 percent acrylic acid by weight and is commercially available under the trademarks Primacor 4990 or Primacor 4983) was added to the Bti dispersion to achieve a 1 percent by weight concentration of polymer. After the polymer addition, 0.1N HCl was slowly added to the dispersion while mixing until the pH was 3.5 which modified the charge of the polymer causing precipitation of the polymer with the Bti entrapped in the polymer matrix. The resulting solid was then filtered, air dried and ground to a particle size of between 1 and 100 $\mu$m.

Example 2

Various charged polymers were investigated for their ability to entrap Bti during precipitation. The polymers were precipitated by pH change, addition of divalent ions, or salting out with simple salts. For anionic polymers, 1N HCl, 7.5M $CaCl_2$ or 5N NaCl was added to the polymer solutions (or polymer dispersions as in the case of the polymers containing phosphinic or phosphonic acid moieties). For the cationic polymers, 1N NaOH, or 1N $H_2SO_4$ was added. A coacervation reaction was also done for each of the polymers; poly(acrylic acid) was mixed with cationic polymers and poly(diallyldimethylammonium chloride) was mixed with the anionic polymers. If precipitation occurred, the process was repeated in the presence of Bti. Results are shown in Table 1. Efficiency of Bti entrapment was estimated by microscopic examination. In the microscopic examination, Bti which is entrapped is seen in association with the polymeric material rather than free of the polymeric material. The values assigned for the degree of entrapment are shown in Table 2. The numerical values in Table 2 (i.e., 0 to 100) represent the percent efficiency of entrapment. A value of 0 means that none of the Bti was observed to be entrapped and a value of 100 means that all of the Bti was observed to be entrapped. In these experiments, a composition with a value of 100 contains approximately 50 percent Bti by weight.

Table 1

RESULTS OF PRECIPITATION AND BTI
ENTRAPMENT STUDIES OF VARIOUS POLYMERS

Method of Precipitation:

| Polymer | pH Change | Divalent Ion Addition | Salting Out | Coacervation |
|---|---|---|---|---|
| | (HCl) | (CaCl$_2$) | (NaCl) | |
| ANIONIC | | | | |
| Poly(acrylic acid), linear | --* | +/+** | +/+ | +/+ |
| Poly(acrylic acid), cross-linked | -- | +/+ | +/+ | +/+ |
| Carrageenan, IV | -- | -- | -- | +/+ |
| Carrageenan, V | -- | -- | -- | +/+ |
| Polystyrene Sulfonate | -- | +/+ | -- | +/+ |
| Polystyrene/Butadiene latex with phosphinic acid moieties | +/+ | +/+ | -- | +/+ |
| Polystyrene/Butadiene latex with phosphonic acid moieties | -- | +/+ | -- | +/+ |
| Ethylene/acrylic acid (about 20% acrylic acid) | +/+ | +/+ | +/+ | +/+ |
| | (NaOH) | (H$_2$SO$_4$) | | |
| CATIONIC | | | | |
| Poly(diallyldimethyl ammonium chloride) | -- | -- | NT | +/+ |
| Poly(vinylbenzyltrimethyl ammonium chloride) | -- | -- | NT | +/+ |
| JR-400 (a cationic derivative of hydroxyethyl cellulose) | -- | -- | NT | +/+ |
| Polybrene ionene | -- | -- | NT | +/+ |
| Poly(ethylenimine) | -- | +/-*** | NT | +/+ |
| Reactive Polysoap | -- | +/+ | NT | +/+ |

* "--" = precipitation of polymer did not occur

** "+/+" = precipitation of polymer occurred and Bti was entrapped

*** "+/-" = precipitation of polymer occurred and Bti was not entrapped

NT means no test was performed

JR 400 represents UCARE® polymer JR-400; UCARE is a registered trademark of Union Carbide Corporation U.S.A.

8

## Table 2

### PERCENT EFFICIENCY OF BTI ENTRAPMENT BY VARIOUS POLYMERS

Method of Precipitation:

| Polymer | pH Change | Divalent Ion Addition | Salt-ing Out | Coacer-vation |
|---|---|---|---|---|
| **ANIONIC** | | | | |
| Poly(acrylic acid), linear | NP* | 100 | 100 | 100 |
| Poly(acrylic acid), cross-linked | NP | 100 | 100 | 100 |
| Carrageenan, IV | NP | NP | NP | 65 |
| Carrageenan, V | NP | NP | NP | 60 |
| Polystyrene Sulfonate | NP | 20 | NP | 100 |
| Polystyrene/Butadiene latex with phosphinic acid moieties | 80 | 90 | NP | 95 |
| Polystyrene/Butadiene latex with phosphonic acid moieties | NP | 100 | NP | 95 |
| Ethylene/acrylic acid (about 20% acrylic acid) | 100 | 100 | 99 | 100 |
| **CATIONIC** | | | | |
| Poly(diallyldimethyl ammonium chloride) | NP | NP | NT** | 100 |
| Poly(vinylbenzyltrimethyl ammonium chloride) | NP | NP | NT | 75 |
| JR-400 (a cationic derivative of hydroxyethyl cellulose) | NP | NP | NT | 100 |
| Polybrene ionene | NP | NP | NT | 100 |
| Poly(ethylenimine) | NP | 0 | NT | 80 |
| Reactive Polysoap | NP | 70 | NT | 90 |

\* NP = No precipitation of polymer (corresponds to the "--" designation employed in Table 1).

\*\* NT means no test was performed.

Example 3

Various charged copolymers and multipolymers were tested for their ability to entrap Bti during precipitation by pH change caused by the addition of 0.1N HCl or by divalent ion addition (i.e., the addition of CaCl$_2$). The methods used were substantially as described in Example 2.

The results are shown in Table 3.

EP 0 250 908 B1

## Table 3

### PERCENT EFFICIENCY OF BTI ENTRAPMENT BY VARIOUS POLYMERS

#### Method of Precipitation

| Polymer | pH Change | Divalent Ion Addition |
|---|---|---|
| 50MAA/50EA | 100 | NP |
| 40MAA/60BA | 100 | 100 |
| 60MAA/40ST | 90 | 90 |
| 60MAA/40BD | 100 | 100 |
| 20AA/80EL | 100 | 100 |
| 50AA/50AM | 100 | 100 |
| 50EA/30VAc/10MAA/10AA | 100 | NP |
| 56MMA/20MAA/20EA | 99 | 80 |
| 56MMA/20MAA/24EA | 100 | 85 |

NP means no precipitation occurred;
MAA = methacrylic acid; EA = ethyl acrylate;
BA = butyl acrylate; ST = styrene; BD = butadiene;
AA = acrylic acid;  EL = ethylene; AM = acrylamide;
VAc = vinyl acetate; MMA = methyl methacrylate.

The number preceding the polymer component indicates the approximate percent by weight of that component in the polymer, e.g., 50MAA/50EA represents a polymer composed of about 50% by weight of methacrylic acid and 50% by weight of ethyl acrylate.

## Example 4

Persistence of the compositions of the invention in the mosquito feeding zone was demonstrated by the following. A 4 milligram (mg) sample of a desired pesticidal composition was prepared employing a pH change to precipitate the polymer to entrap Bti as previously described herein. The pesticidal composition was 1 part ethylene/acrylic acid copolymer (EAA) (composed of about 20% by weight acrylic acid) to one part Bti and was applied to the surface of 500 milliliters (ml) of water contained in a separatory funnel. After 10 days, five 100 ml fractions were drained from the funnel through the stopcock. Twenty Aedes egypti larvae were placed into each fraction, surviving larvae were counted 24 hours later. Of the 5 fractions, the fraction containing the uppermost layer (in the separatory funnel) exhibited the majority of the activity, killing 100 percent of the larvae. The bottom fraction had slight activity and no activity was found in the other fractions.

## Example 5

Films were cast from an alkaline (about pH 8) dispersion of EAA (Primacor 4990) using standard procedures known in the art. UV absorbers such as carbon black and para-aminobenzoic acid (PABA) were incorporated into the dispersion before casting. These films were used to shield plates of agar inoculated with Escherichia coli (strain JC411) during exposure to a germicidal lamp placed 14 inches above the

10

plates. After exposure, plates were incubated for 24 hours and surviving E. coli colonies were counted. The EAA film without UV absorbers gave no significant protection to plates exposed for 30 seconds. Incorporating carbon black into the film at a concentration of 3 percent protected 30 percent of the bacteria from 3 to 10 minutes exposure and 15 percent of the bacteria from 15 minutes exposure. PABA incorporated into the film at a concentration of 3 percent gave 100 percent protection of the bacteria and at a 2 percent concentration gave 50 percent protection in testing employing 15 minutes of UV exposure.

Example 6

The following example illustrates the preparation of a polymer dispersion containing about 35 percent solids.

The following components were mixed together in a one-gallon (3.785 liters) stirred batch reactor at ambient temperature. The components were added to the batch reactor in the following order.

(1) 760 grams ethylene/acrylic acid copolymer (about 20 percent acrylic acid, 1100 melt index)
(2) 1350 grams deionized water
(3) 60 milliliters $NH_3$ in water to make a $NH_3$:COOH mole ratio of 0.35:1.0.

After the components were added, the reactor was heated, with continuous stirring, to 110°C and held at that temperature for 1.5 hours. The stirred mixture was allowed to cool to 35°C before it was discharged from the reactor. The dispersion was filtered through a 100 mesh screen (sieve opening 0.149 mm), and allowed to cool to ambient temperature.

Example 7

The following example illustrates the incorporation of carbon black into a pesticidal composition.

Carbon black (0.15 g) was added to 14.28 grams (g) of a 33 percent alkaline (about pH 8) aqueous dispersion of ethylene/acrylic acid copolymer (about 20% by weight acrylic acid). The resulting ethylene/acrylic acid copolymer/carbon black mixture was then added to 500 ml of a 1 percent aqueous suspension of Bti. The carbon black was well dispersed and 100 percent incorporation of the carbon black into the pesticidal composition was achieved upon precipitation using 0.1N HCl.

Example 8

A dispersion containing 12.45 g Bti technical powder (powder containing crystals and spores of Bacillus thuringiensis var. israelensis), 12.45 g ethylene acrylic acid polymer (EAA) solids (PRIMACOR® 4990), and 0.09 g PVDC microspheres (polyvinylidene chlorie, MIRALITE® 177) was prepared in 1200 ml water. Acid precipitation was achieved by the addition of 0.1 N HCl until the pH was 3.5 which modified the charge of the polymer causing precipitation of the polymer with the Bti and PVDC microspheres entrapped in the polymer matrix. The resulting solid was then filtered and dried under agitation in a laboratory scale Hobart mixer using a wire wisp attachement. After 8 hours of drying time, the result was a fine powder in which the diameter of the majority of particles was between 1 and 100 $\mu$m. Examination with a phase contrast microscope revealed that Bti/EAA material adhered to the surface of the hollow microspheres.

Example 9

A package (7 g) of Fleischmann's Active Dry yeast was added to 60 ml of water at 40°C. This mixture was stirred with a magnetic stirring bar and held for 30 minutes at this temperature. The mixture was then added to a dispersion containing Bti wettable powder (powder containing crystals and spores of Bacillus thuringiensis var. israelensis) and EAA (PRIMACOR 4990), each at a concentration of 1% solids by weight. The total volume of the mixture after all components had been added was 1254 ml. Precipitation of the EAA was achieved by the addition of 0.1 N HCl while mixing until the pH was 3.5 which modified the charge of the polymer causing precipitation of the polymer with the Bti and the yeast entrapped in the polymer matrix. The resulting solid was then filtered, air dried and ground to a particle size of between 1 and 100 $\mu$m.

**Claims**

1. An ingestible pesticidal composition comprising a pesticidally effective amount of an ingestible pesticide entrapped by a precipitated charged polymer,
   **characterized in that**

the polymer is selected from the group comprising poly(ethyleneimine), poly(vinylbenzyl-trimethylammonium chloride), poly(diallyldimethyl-ammonium chloride), polybrene ionene, reactive polysoap, ethylene/acrylic acid, ethylene/methacrylic acid, linear poly(acrylic acid), cross-linked poly(acrylic acid), polystyrene sulfonate, carrageenan type IV, carrageenan type V, polystyrene/butadiene latex containing phosphinic acid moieties, polystyrene/-butadiene latex containing phosphonic acid moieties, methacrylic acid/ethyl acrylate, methacrylic acid/butyl acrylate, methacrylic acid/styrene, methacrylic acid/butadiene, acrylic acid/acrylamide, ethyl acrylate/vinyl acetate/methacrylic acid/acrylic acid, or methyl methacrylate/methacrylic acid/ethyl acrylate.

2. Composition of Claim 1 wherein the pesticide comprises from 0.001 percent to 95 percent by weight and the polymer comprises from 99.999 percent to 5 percent by weight (based on the total weight of the pesticide and polymer).

3. Composition of Claims 1 or 2 wherein the pesticide is a bacteria, fungi, virus, insecticidally toxic components thereof or insecticidally toxic product thereof or a mixture thereof.

4. Composition of Claim 3 wherein the pesticide is nuclear polyhedrosis virus.

5. Composition of any one of Claims 1 to 3 wherein the pesticide is Bacillus thuringiensis, Bacillus sphaericus, Bacillus popilliae, Bacillus cereus, Bacillus lentimorbus or Bacillus fribourgensis.

6. Composition of Claim 5 wherein the pesticide is Bacillus thuringiensis var. israelensis, an insecticidally toxic component or insecticidally toxic product thereof or a mixture thereof.

7. Composition of any one of Claims 1 to 6 which contains an additive comprising from 0.005 to 99 percent by weight of the composition (based on the total weight of the composition).

8. Composition of Claim 7 where the additive is an ultraviolet light stabilizer, a phagostimulant, a mineral or inorganic filler, a hollow microballoon, an organic filler, or a mixture thereof.

9. Composition of any one of Claims 1 to 8 which is in the form of particles between 1 $\mu$m and 100 $\mu$m in diameter.

10. Composition of any one of Claims 1 to 9 wherein the composition has a higher water flotation ability as compared to the ingestible pesticide alone.

11. Composition of Claim 1 comprising from 0.01 to 75 percent by weight of Bti (based on the total weight of Bti and copolymer) entrapped by a precipitated ethylene/acrylic acid copolymer, and optionally containing one or more additives.

12. The composition of Claim 11 wherein the amount of acrylic acid in the copolymer represents 12 to 25 percent by weight of the copolymer.

13. A process for the preparation of pesticidal compositions of any one of Claims 1 to 12 comprising contacting an ingestible biological pesticide with a charged polymer in an aqueous medium, modifying the charge of a sufficient quantity of the functional groups of the charged polymer to cause precipitation of the polymer and entrapment of the pesticide to form a solid pesticidal composition comprised of a pesticidally effective amount of the ingestible pesticide entrapped by a precipitated charged polymer, characterized in that the polymer used is selected from the group comprising poly(ethylenimine), poly-(vinylbenzyl-trimethylammonium chloride), poly(diallyldimethyl-ammonium chloride), polybrene ionene, reactive polysoap, ethylene/acrylic acid, ethylene/methacrylic acid, linear poly(acrylic acid), cross-linked poly(acrylic acid), polystyrene sulfonate, carrageenan type IV, carrageenan type V, polystyrene/butadiene latex containing phosphinic acid moieties, polystyrene/-butadiene latex containing phosphonic acid moieties, methacrylic acid/ethyl acrylate, methacrylic acid/butyl acrylate, methacrylic acid/styrene, methacrylic acid/butadiene, acrylic acid/acrylamide, ethyl acrylate/vinyl acetate/methacrylic acid/acrylic acid, or methyl methacrylate/methacrylic acid/ethyl acrylate.

14. A method for the control of pests comprising applying an effective amount of the composition of any one of Claims 1 to 12 to the pests and/or to the pests habitat.

15. A method for the control of pests comprising applying a pesticidally effective amount of the composition formed by the process of Claim 14 to the pests and/or to the pests' habitat.

**Patentansprüche**

1. Aufnehmbare pestizide Zusammensetzung, die eine pestizid wirksame Menge eines von einem präzipitierten geladenen Polymer eingeschlossenen aufnehmbaren Pestizids enthält,
   **dadurch gekennzeichnet,**
   daß das Polymer aus der Gruppe, umfassend Poly(ethylenimin), poly-(vinylbenzyltrimethylammoniumchlorid), Poly(diallyldimethylammoniumchlorid), Polybren-Ionen, reaktive Polyseife, Ethylen/Acrylsäure, Ethylen/Methacrylsäure, lineare Poly(acrylsäure), quervernetzte Poly-(acrylsäure), Polystyrolsulfonat, Carrageenan Typ IV, Carrageenan Typ V, Polystyrol/Butadienlatex mit Phosphinsäuregruppen, Polystyrol/Butadienlatex mit Phosphonsäuregruppen, Methacrylsäure/Ethylacrylat, Methacrylsäure/Butylacrylat, Methacrylsäure/Styrol, Methacrylsäure/Butadien, Acrylsäure/Acrylamid, Ethylacrylat/Vinylacetat/Methacrylsäure/Acrylsäure oder Methylmethacrylat/Methacrylsäure/Ethylacrylat, ausgewählt ist.

2. Zusammensetzung nach Anspruch 1, worin das Pestizid von 0,001 % bis 95 Gew.-% umfaßt und das Polymer von 99,999 % bis 5 Gew.-% umfaßt (auf Basis des Gesamtgewichts des Pestizids und des Polymers).

3. Zusammensetzung nach Anspruch 1 oder 2, worin das Pestizid ein Bakterium, ein Pilz, ein Virus, insektizid-toxische Komponenten davon oder ein insektizid-toxisches Produkt davon oder ein Gemisch davon ist.

4. Zusammensetzung nach Anspruch 3, worin das Pestizid Kernpolyhedrosevirus ist.

5. Zusammensetzung nach einem der Ansprüche 1 bis 3, worin das Pestizid Bacillus thuringiensis, Bacillus sphaericus, Bacillus popilliae, Bacillus cereus, Bacillus lentimorbus oder Bacillus fribourgensis ist.

6. Zusammensetzung nach Anspruch 5, worin das Pestizid Bacillus thuringiensis var. israelensis, eine insektizid-toxische Komponente oder ein insektizidtoxisches Produkt davon oder ein Gemisch davon ist.

7. Zusammensetzung nach einem der Ansprüche 1 bis 6, die einen Zusatzstoff enthält, der von 0,005 bis 99 Gew.-% der Zusammensetzung umfaßt (auf Basis des Gesamtgewichts der Zusammensetzung).

8. Zusammensetzung nach Anspruch 7, worin der Zusatzstoff ein Ultraviolettlicht-Stabilisator, ein Phagostimulanz, ein mineralisches oder anorganisches Füllmittel, eine hohle Mikrokugel, ein organisches Füllmittel oder ein Gemisch davon ist.

9. Zusammensetzung nach einem der Ansprüche 1 bis 8, die in Form von Teilchen zwischen 1 $\mu$m und 100 $\mu$m im Durchmesser ist.

10. Zusammensetzung nach einem der Ansprüche 1 bis 9, worin die Zusammensetzung eine höhere Wasserflotationsfähigkeit im Vergleich zum aufnehmbaren Pestizid alleine besitzt.

11. Zusammensetzung nach Anspruch 1, umfassend von 0,01 bis 75 Gew.-% Bti (auf Basis des Gesamtgewichts von Bti und Copolymer), eingeschlossen von einem präzipitierten Ethylen/Acrylsäure-Copolymer und gegebenenfalls einen oder mehrere Zusatzstoffe enthaltend.

12. Zusammensetzung nach Anspruch 11, worin der Anteil von Acrylsäure im Copolymer 12 bis 25 Gew.-% des Copolymers darstellt.

13. Verfahren zur Herstellung von pestiziden Zusammensetzungen nach einem der Ansprüche 1 bis 12, umfassend das Kontaktieren eines aufnehmbaren biologischen Pestizids mit einem geladenen Polymer in einem wäßrigen Medium, Modifizieren der Ladung einer ausreichenden Menge der funktionellen Gruppen des geladenen Polymers, um Präzipitation des Polymers und Einschluß des Pestizids zu verursachen, so daß eine feste pestizide Zusammensetzung gebildet wird, die eine pestizid wirksamen Menge des von einem präzipitierten geladenen Polymer eingeschlossenen aufnehmbaren Pestizids umfaßt,

**dadurch gekennzeichnet,**

daß das verwendete Polymer aus der Gruppe, umfassend Poly(ethylenimin), Poly-(vinylbenzyltrimethylammoniumchlorid), Poly(diallyldimethylammoniumchlorid), Polybren-Ionen, reaktive Polyseife, Ethylen/Acrylsäure, Ethylen/Methacrylsäure, lineare Poly(acrylsäure), quervernetzte Poly-(acrylsäure), Polystyrolsulfonat, Carrageenan Typ IV, Carrageenan Typ V, Polystyrol/Butadienlatex mit Phosphinsäuregruppen, Polystyrol/Butadienlatex mit Phosphonsäuregruppen, Methacrylsäure/Ethylacrylat, Methacrylsäure/Butylacrylat, Methacrylsäure/Styrol, Methacrylsäure/Butadien, Acrylsäure/Acrylamid, Ethylacrylat/Vinylacetat/Methacrylsäure/Acrylsäure oder Methylmethacrylat/Methacrylsäure/Ethylacrylat, ausgewählt ist.

14. Verfahren zur Bekämpfung von Schädlingen, umfassend das Ausbringen einer wirksamen Menge der Zusammensetzungen nach einem der Ansprüche 1 bis 12 auf die Schädlinge und/oder auf den Lebensraum der Schädlinge.

15. Verfahren zur Bekämpfung von Schädlingen, umfassend das Ausbringen einer pestizid wirksamen Menge der durch das Verfahren nach Anspruch 14 hergestellten Zusammensetzung auf die Schädlinge und/oder auf den Lebensraum der Schädlinge.

**Revendications**

1. Composition pesticide ingestible comprenant une quantité à effet pesticide d'un pesticide ingestible enfermé par un polymère chargé et précipité, caractérisée en ce que le polymère est choisi parmi une poly(éthylène imine), un poly(chlorure de vinylbenzyl-triméthylammonium), un poly(chlorure de diallyl-diméthylammonium), un polybrène ionène, un polysavon réactif, un polymère éthylène/acide acrylique, éthylène/acide méthacrylique, un poly(acide acrylique) linéaire, un poly(acide acrylique) réticulé, un poly(styrène sulfonate), la carraghénine de type IV, la carraghénine de type V, un latex poly-(styrène/butadiène) contenant des fragments acide phosphinique, un latex poly(styrène/butadiène) contenant des fragments acide phosphonique, un polymère acide méthacrylique/acrylate d'éthyle, acide méthacrylique/acrylate de butyle, acide méthacrylique/styrène, acide méthacrylique/butadiène, acide acrylique/acrylamide, acrylate d'éthyle/acétate de vinyle/acide méthacrylique/acide acrylique ou méthacrylate de méthyle/acide méthacrylique/acrylate d'éthyle.

2. Composition selon la revendication 1, dont le pesticide constitue de 0,001 à 95 % en poids et le polymère constitue de 99,999 à 5 % en poids (par rapport au poids total du pesticide et du polymère).

3. Composition selon la revendication 1 ou 2, dans laquelle le pesticide est une bactérie, un champignon, un virus, des composants toxiques à effet insecticide de ceux-ci ou un produit toxique à effet insecticide de ceux-ci ou un mélange de ceux-ci.

4. Composition selon la revendication 3, dans laquelle le pesticide est le virus de la polyédrose nucléaire.

5. Composition selon l'une quelconque des revendications 1 à 3, dans laquelle le pesticide est Bacillus thuringiensis, Bacillus sphaericus, Bacillus popilliae, Bacillus cereus, Bacillus lentimorbus, ou Bacillus fribourgensis.

6. Composition selon la revendication 5, dans laquelle le pesticide est Bacillus thuringiensis var. israelensis, un composant toxique à effet insecticide de celui-ci ou un produit toxique à effet insecticide de celui-ci, ou un mélange de ceux-ci.

7. Composition selon l'une quelconque des revendications 1 à 6, qui contient un additif constituant de 0,005 à 99 % en poids de la composition (par rapport au poids total de la composition).

8. Composition selon la revendication 7, dans laquelle l'additif est un stabilisant UV, un phagostimulant, une charge inorganique ou minérale, une microsphère creuse, une charge organique ou un mélange de ceux-ci.

9. Composition selon l'une quelconque des revendications 1 à 8, qui est sous la forme de particules de taille comprise entre 1 et 100 um de diamètre.

10. Composition selon l'une quelconque des revendications 1 à 9, dans laquelle la composition est plus apte à flotter que le pesticide ingestible seul.

11. Composition selon la revendication 1, comprenant de 0,01 à 75 % en poids de Bti (par rapport au poids total du Bti et du copolymère) enfermé par un copolymère éthylène/acide acrylique précipité, et contenant éventuellement un ou plusieurs additifs.

12. Composition selon la revendication 11, dans laquelle la quantité d'acide acrylique dans le copolymère représente de 12 à 25 % en poids du copolymère.

13. Procédé pour la préparation de compositions pesticides selon l'une quelconque des revendications 1 à 12, comprenant la mise en contact d'un pesticide biologique ingestible avec un polymère chargé, dans un milieu aqueux, la modification de la charge d'un nombre des groupes fonctionnels du polymère chargé suffisant pour provoquer la précipitation du polymère et l'enfermement du pesticide, pour la formation d'une composition pesticide solide composée d'une quantité à effet pesticide du pesticide ingestible enfermée par un polymère chargé précipité, caractérisé en ce que le polymère utilisé est choisi parmi une poly(éthylène imine), un poly(chlorure de vinylbenzyl-triméthylammonium), un poly-(chlorure de diallyl-diméthylammonium), un polybrène ionène, un polysavon réactif, un polymère éthylène/acide acrylique, éthylène/acide méthacrylique, un poly(acide acrylique) linéaire, un poly(acide acrylique) réticulé, un poly(styrène sulfonate), la carraghénine de type IV, la carraghénine de type V, un latex poly(styrène/butadiène) contenant des frag contenant des fragments acide phosphinique, un latex poly(styrène/butadiène) contenant des fragments acide phosphonique, un polymère acide méthacrylique/acrylate d'éthyle, acide méthacrylique/acrylate de butyle, acide méthacrylique/styrène, acide méthacrylique/butadiène, acide acrylique/acrylamide, acrylate d'éthyle/acétate de vinyle/acide méthacrylique/acide acrylique ou méthacrylate de méthyle/acide méthacrylique/acrylate d'éthyle.

14. Procédé pour la lutte contre des nuisibles, comprenant l'application d'une quantité efficace de la composition selon l'une quelconque des revendications 1 à 12 sur les nuisibles et/ou sur l'habitat des nuisibles.

15. Procédé pour la lutte contre des nuisibles, comprenant l'application d'une quantité à effet pesticide d'une composition, formée par le procédé de la revendication 14, sur les nuisibles et/ou sur l'habitat des nuisibles.